# EUROPEAN PATENT APPLICATION

(11) **EP 3 386 147 A1**
(43) Date of publication of application: **10.10.2018**
(21) Application number: 17305397.6
(22) Date of filing: 03.04.2017
(51) Int. Cl.: H04L 9/32

(54) **METHOD FOR RENEWING A CERTIFICATE IN A SECURE ELEMENT**

(71) Applicant: GEMALTO SA, 92190 Meudon (FR)
(72) Inventor: DUBOIS, Denis, 13881 Gemenos cedex (FR); DUPREZ, Jérôme, 13881 Gemenos cedex (FR); DAO, Frédéric, 13881 Gemenos cedex (FR)

(57) **Abstract**

The invention proposes a secure element (10) cooperating with a telecommunication terminal, the secure element (10) being provisioned with:
- A secret key of a proxy server (31);
- A secret key shared with a certificate delivery server (30) of the manufacturer of the secure element (10);
- A first certificate of the manufacturer of the secure element (10);
the secure element (10) comprising a certificate renewal application (51) for:
- Generating (35), at an triggering event (34):
e- a new key pair composed by a new private key and a new public key;
f- a Certificate Signing Request ciphered by the secret key shared with the delivery server (30) of the manufacturer of the secure element (10),

and for sending the ciphered Certificate Signing Request also ciphered by the secret key of the proxy server (31) to the certificate delivery server (30) through the proxy server (31);
the certificate renewal application (51) receiving from the certificate delivery server (30) through the proxy server (31) a second certificate generated by the certificate delivery server (30).

## Description

The invention concerns telecommunications and more particularly provides a solution that permits to automatically renew a certificate stored in a secure element, like for example a Sim card, a UICC, an e-UICC (embedded UICC) or an i-EUICC (integrated UICC, a UICC that has been integrated in a circuit of a terminal with which it cooperates). Sometimes, such certificates need to be renewed/generated and the invention provides a mechanism to generate and renew this certificate.

A certificate contains information about the owner of the certificate, like e-mail address, owner's name, certificate usage, duration of validity, resource location or Distinguished Name (DN) which includes the Common Name (CN) (web site address or e-mail address depending of the usage) and the certificate ID of the person who certifies (signs) this information. It contains also the public key and finally a hash to ensure that the certificate has not been tampered with. As long as a user has made the choice to trust the person who signs this certificate, therefore this user also trusts this certificate. This is a certificate trust tree or certificate path. Usually browsers or applications have already loaded the root certificate of well-known Certification Authorities (CA) or root CA Certificates. The CA maintains a list of all signed certificates as well as a list of revoked certificates. A certificate is unsecure until it is signed, as only a signed certificate cannot be modified.

The problem that the invention proposes to solve is that more and more secure elements are installed inside devices (e-UICCs or i-UICCs) from which they cannot be removed or with difficulty. IoT (Internet of Things) devices embedding e-UICCs or i-UICCs have to be used for years - like cars for example.

Today there is only a solution to detect automatically that a certificate has to be renewed, or to foresee that it is going to expire soon: This solution consists is based on server mechanism that could do OTA (Over-The-Air) campaign of certificate renewal.

This is a complex solution as keys have to be generated and exchanged securely between secure elements and servers. More than this, servers have to know the certificate revocation date of all secure elements. In addition, campaigns on IoT devices are difficult to schedule (short presence time, low-bandwidth connectivity,..). And a secure element contains also many certificates.

The present invention proposes a solution to this problem.

More precisely, the invention proposes to initiate, from the secure element, a renewal of a certificate, when a triggering event occurs. This triggering event can be an external triggering event (a certificate renewal request coming from a server) or an internal triggering event (an event not coming from the network with which the secure element is communicating, but an event forecasted or computed by the secure element itself).

More precisely, the invention proposes a secure element cooperating with a telecommunication terminal, the secure element being provisioned with:
- A secret key of a proxy server;
- A secret key shared with a certificate delivery server of the manufacturer of the secure element;
- A first certificate of the manufacturer of the secure element;
the secure element comprising a certificate renewal application for:
- Generating, at an triggering event:
   a- a new key pair composed by a new private key and a new public key;
   b- a Certificate Signing Request ciphered by the secret key shared with the delivery server of the manufacturer of the secure element,
and for sending the ciphered Certificate Signing Request also ciphered by the secret key of the proxy server to the certificate delivery server through the proxy server;
the certificate renewal application receiving from the certificate delivery server through the proxy server a second certificate generated by the certificate delivery server.

In a first embodiment, the second certificate is signed by the same certificate issuer that has signed the first certificate.

In a second embodiment, the second certificate is signed by another certificate issuer. Preferably, the triggering event is an event internal to the secure element.

In an alternative, the triggering event is an event external to the secure element. It can be for example an information indicating that the first certificate is expired of will expire soon.

The invention also proposes a certificate delivery server comprising at least a microprocessor dedicated for:
a- receiving from a secure element cooperating with a telecommunication terminal a Certificate Signing Request ciphered by a secret key shared with the secure element;
b- sending to the secure element a script ciphered by the secret key, the script containing at least a new certificate for the secure element.

The new certificate can be signed by a certificate issuer that has signed a certificate already present on the secure element before step -a- or by another certificate issuer that the one that has signed a certificate already present on the secure element before step -a-.

The invention will be better understood by reading the description of the following figures that represent:
- Figure 1 an example of a system where a secure element can retrieve a date for estimating if it has to renew its certificate;
- Figure 2 a simplified method for renewing a certificate;
- Figure 3 a detailed flowchart representing the generation of a certificate according to the invention.

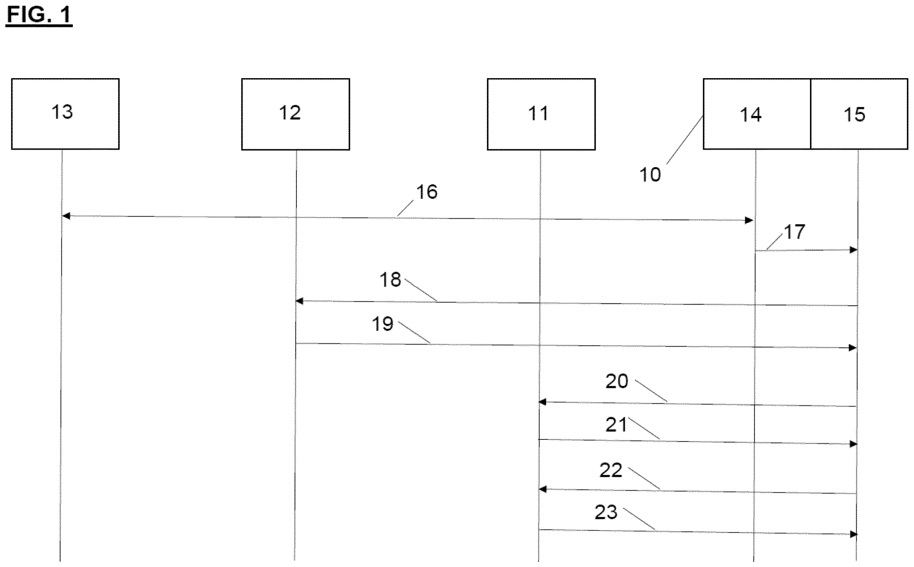

Figure 1 represents an example of a system where a secure element 10 (a UICC, a eUICC or a Secure Element) can retrieve a date for estimating if it has to renew its certificate.

In this system, the secure element is referenced 10. It cooperates with a telecommunication terminal 11, like for example an IoT device. The system also comprises a trusted clock server 12 and a remote server 13 that could be an OTA server.

The secure element 10 comprises a (e)UICC application 14 and a clock application 15. The clock application 15 stores the last most accurate current date.

A first solution for providing the clock application 15 to get an accurate date consists in receiving (step 16), during exchanges with the remote server 13, an accurate date (date 1).

Date 1 is for example contained in the header of an HTTP message sent to the application 14 during exchanges with the server 13 and pushed from the server 13 to the application 14 that forwards (step 17) the current date (date 1) to the clock application 15. Date 1 is then stored in the clock application 15.

Another solution is to request from the clock application 15 to the trusted clock server 12 an accurate date (date 2 - step 18). The trusted clock server 12 answers by providing the clock application 15 (step 19) with this accurate date (date 2).

Another solution consists in requesting periodically (through PLI commands 20, 22 - PLI standing for Provide Local Information) the terminal 11 of the current date. This date is normally accurate. During steps 21 and 23, the terminal 11 sends respectively current dates date 3 and date 4.

The clock application 15 can check if the received dates (date 3 and date 4) are consistent with the last stored date (date 3 is compared with date 2 and date 4 is compared with date 3). If there is an accuracy, the terminal 11 can be used for a while as a clock reference.

Otherwise, in order to get a precise accurate date, the clock application has to repeat step 18 in order to get an accurate date 5 from the trusted clock server 12.

Thus, the clock application 15 can estimate the current clock based on some inputs, some of them being considered as accurate and trusted:
- Those coming from an OTA Server (Date could be part of a HTTP response);
- Those coming from certified (or trusted) clock server;
- Those contained in a CRL (Certificate revocation list) received from a SMDP or equivalent system. This CRL contains the current date and a signature.
- Those contained in a certificate that the secure element has received and verified.

The clock application 15 stores the last accurate date. Optionally, every N times the clock application 15 has estimated the current date from inaccurate sources only, a request to a trusted (clock) server is performed.

The clock application 15 is able to build a history of dates received by the secure element 10. Such history could be used by the secure element 10 to determine the level of trust of PLI commands.

The secure element 10 knows the duration of validity of its certificate and can thus compute the date at which its certificate(s) will expire.

The invention proposes to use for example such a triggering event for asking from a trusted server a new certificate when it detects that a certificate is expired or will expire soon. The server able to send such a certificate to the secure element does therefore not need to know when the certificate of this secure element will expire since the request is coming from the secure element (the secure element takes the initiative to request for a new certificate).

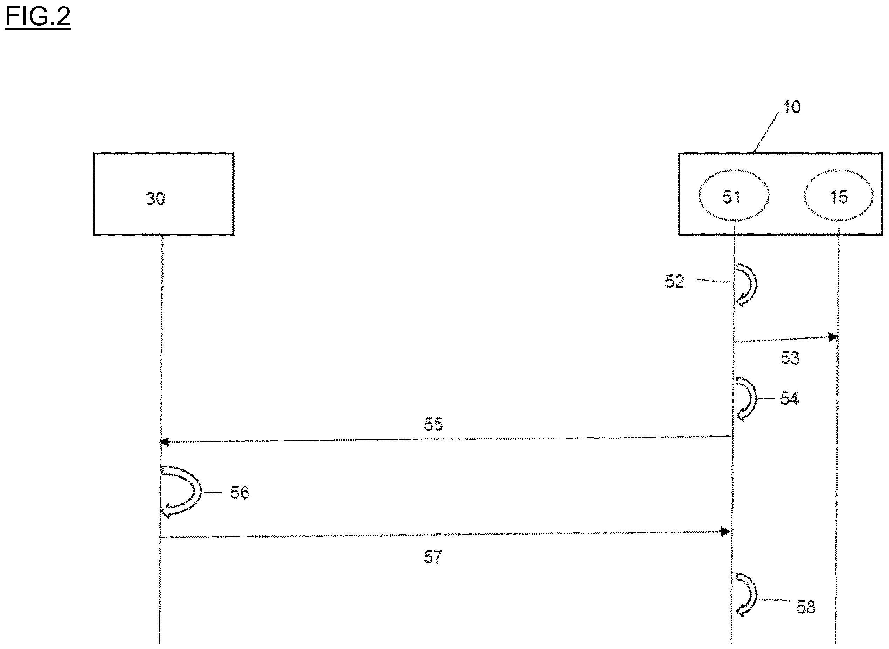

For example, as shown in figure 2 that represents a simplified method for renewing a certificate, the secure element 10 can comprise a certificate renewal application 51 that parses and retrieves (step 52) the expiration date of a certificate or certificates. Optionally, the address of a certificate delivery server 30 (or EUM standing for eUICC manufacturer) is retrieved from the certificate. At step 53, the certificate renewal application 51 retrieves the current date stored in the clock application 15. When getting this date, the application can decide if a certificate has to be renewed or not. If it detects that the certificate will expire soon or has already expired, the certificate (that can be noted Cert1[SK1old, PK1old]) has to be renewed (step 54).

The certificate renewal application 51 then self generates a new key pair SK1new, PK1new (with SK corresponding to secret key and PK to public key).

The certificate renewal application 51 then sends at step 55 a CSR (Certificate Signing Request) message containing PK1new, to the certificate delivery server 30. In addition to being signed by the SK1new, to prove ownership of the SK1new (signature being verifiable using PK1new), the CSR is signed by an additional key shared with the certificate delivery server 30, to prove the identity of the secure element as it will be seen later.

At step 56, the certificate delivery server 30 checks if the certificate has to be renewed and signs with its EUM CI (Certificate Issuer key) or another CI the certificate Cert1 request.

At step 57, the certificate delivery server 30 sends in a script commands to the certificate renewal application 51 requesting to store the new certificate Cert1 new signed by the EUM CI.

At step 58, the certificate renewal application 51 executes the commands and replaces the old certificate CERT1old with Cert1 new.

The certificate delivery server 30 could also send to the application 51 a command to replace its old EUM and CI certificates by new corresponding certificates (CERT.EUM.new and CERT.CI.new).

The invention allows a self-certificate generation by the secure element, based for example on the detection of its expiration date (already expired or coming soon).

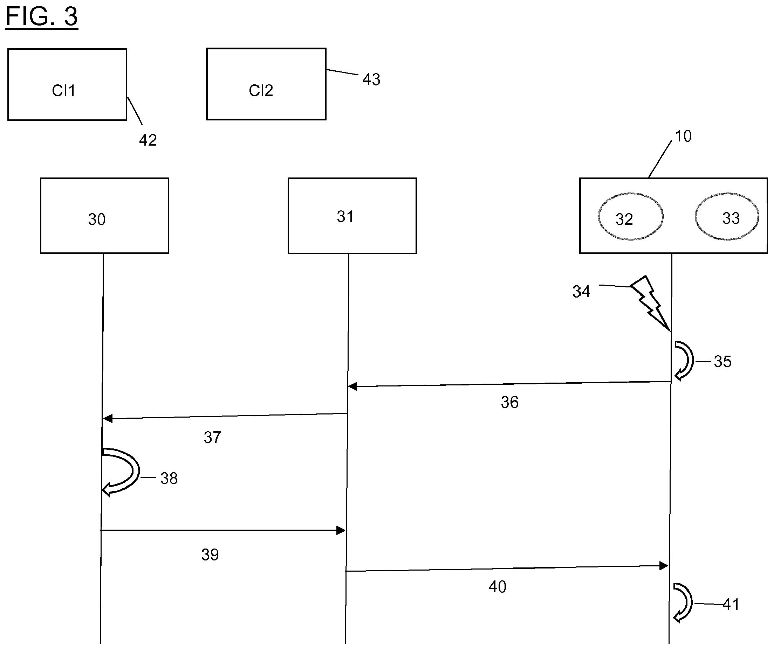

Figure 3 is a detailed flowchart representing the generation of a certificate according to the invention.

Three main entities are here represented:
- The secure element 10 (eUICC/SE) cooperating with a telecommunication terminal;
- The certificate delivery server 30 of the manufacturer of this secure element;
- A proxy server 31, for example an OTA server.

The secure element 10 has two main security domains:
- An OTA security domain 32 comprising a key shared with the proxy server 31. This key can be noted KSOTA;
- An (E)CASD 33 that is the (e)UICC 10 Controlling Authority Security Domain. It contains the data used to enforce trust in the identities of actors (eUICC, remote actors such as SM-SR or SM-DP). The (E)CASD 33 provides services to the ISD-P and ISD-R, in order to perform confidential key establishments. The (E)CASD 33 is created within an (e)UICC at time of manufacture, cannot be deleted or disabled after delivery, is based on the concept of CASD from Global Platform, is configured by the (e)UICC Manufacturer EUM at pre-issuance, contains a non-modifiable (e)UICC secret key (hereinafter called SK-old) and the associated public key (hereinafter called PK-old), the public key PKCI1 of CI1 (and/or its certificate) (CI stands for Certificate Issuer- it corresponds to a Certificate Authority) and a secret keyset (noted KSEUM) permitting to establish a secure channel between the eUICC and the EUM for key/certificate renewal.
It contains also a certificate [Cert1-EUM] signed by the Certificate Issuer CI1: [Cert1-EUM]CI1.

The Certificate Issuer CI1 is noted 42 in figure 2. It contains a key pair SKCI1/PKCI1, SK staying for secret key and PK for public key, and the certificate CI1.

The (E)CASD also contains a certificate that will be renewed. This certificate is called Cert-old and is signed by CI1/EUM (the secret Key of the Certificate EUM signed by the CI1): [Cert-old]CI1/EUM.

At step 34, a triggering event occurring at the level of the secure element 10 (examples of triggering events will be given hereinafter, one of them being the expiration date of the certificate as shown if figure 1), the (e)UICC at step 35:
- generates itself a new key pair SK-new and PK-new;
- generates a CSR (Certificate signing request). This CSR contains metadata and the new public key PK-new, the whole being signed by SK-new;

The CSR is then signed by the secret key (KSEUM) of the manufacturer of the eUICC or by a key shared with the server 30.

The package [[CSR]Kseum] ([[metadata, PK-new]SK-new]KSEUM) is then
transmitted on a secure channel established with KSOTA (a SMS or a http channel) to the proxy server 31. As can be seen, the CSR contains PK-new. Thanks to this public key, the server 30 will be able to verify that the signature of the CSR is valid. The CSR contains identification information of the secure element 10 (examined as a unique identifier in the case of a X.509 certificate).

The proxy server 31 can be a SM-SR (for eUICC M2M), a SM-DP (for eUICC for consumers), a LPA (for eUICC for consumers also), an OTA platform (for UICCs that are not embedded in terminals (eUICCs)). The key KSOTA guarantees that the request is coming from a legitimate (e)UICC.

The proxy server 31 forwards [CSR]KSEUM in a secure channel to the certificate delivery server 30 of the manufacturer that extracts the CSR (the EUM owns KSEUM or another key shared with the (e)UICC). KSEUM guarantees that the CSR is coming from a legitimate (e)UICC. It knows then that the (e)UICC 10 has requested for a new certificate.

A set of certificates can be available at the level of the certificate delivery server 30 of the manufacturer or the EUM can prepare scripts, secured with its own keyset (SGP03 or SGP11 depending on KSEUM) in order to add a new certificate CERT-new in the (e)UICC 10. This new certificate can be provided by the same CI (CI1 referenced 42) that has issued Cert-old or by another CI (CI2 referenced 43) that is noted CI2 and signs a new certificate of the EUM (CERT-EUM). The result is noted [CERT2-EUM]CI2. It could also be [CERT1-EUM]CI1 if a certificate of CI1 is used. A new public key PKCI2 or a complete certificate of CI2 has also to be sent to the (e)UICC 10 (the corresponding secret key is kept secret at the level of the CI2).

The script containing [CERT2-EUM]CI2 and PKCI2 and optionally instructions to install them is then sent on the channel established between the server 30 and the proxy 31 (step 39). This script is secured by KSEUM.

The proxy 31 then sends (step 40) this script to the (e)UICC 10 that know stores in the (E)CASD 33 his previously self-generated data SK-new/PK-new but also now PKCI2 (and/or Cert CI2), [CERT-EUM]CI2 and [CERT-new]EUM.

In the script, some commands asking to delete useless data can also be sent (delete PKCI1, SK-old, PK-old,...).

After step 41, the (e)UICC 10 has received all these new data replacing those present in the (E)CASD before the triggering event 34. It can then use the new certificate instead of the old one.

The main principle of the invention is thus that the secure element 10 initiates the request of a new certificate by sending a CSR to the server 30 when a triggering occurs.

This triggering event can be an event internal to the secure element 10 (for example a detection that a current certificate has expired or will expire soon, or when the secure element has detected that the country where the terminal is present has changed (the CI has then sometimes to be changed)) or an event external to the secure element. For example:
- the secure element 10 has received from a server an instruction to ask for a new certificate, or
- the secure element 10 has contacted a server having an information (a CRL) indicating that a renewal of a certificate is necessary.

There is no need to put in place heavy solutions in order to detect that an IoT device is reachable because it is the (e)UICC or SE that initiates the renewal request. Only reachable secure elements are updated.

The invention also allows to use certificates having short lifetimes.

The invention also proposes a certificate delivery server 30 comprising at least a microprocessor dedicated for:
a- receiving from a secure element 10 cooperating with a telecommunication terminal a Certificate Signing Request ciphered by a secret key shared with this secure element;
b- sending to the secure element a script ciphered by the secret key, this script containing at least a new certificate for the secure element.

## Claims

1. A secure element (10) cooperating with a telecommunication terminal, said secure element (10) being provisioned with:
- A secret key of a proxy server (31);
- A secret key shared with a certificate delivery server (30) of the manufacturer of said secure element (10);
- A first certificate of said manufacturer of said secure element (10);
said secure element (10) comprising a certificate renewal application (51) for:
- Generating (35), at an triggering event (34):
c- a new key pair composed by a new private key and a new public key;
d- a Certificate Signing Request ciphered by said secret key shared with said delivery server (30) of said manufacturer of said secure element (10),
and for sending said ciphered Certificate Signing Request also ciphered by said secret key of said proxy server (31) to said certificate delivery server (30) through said proxy server (31); said certificate renewal application (51) receiving from said certificate delivery server (30) through said proxy server (31) a second certificate generated by said certificate delivery server (30).

2. A secure element (10) according to claim 1, wherein said second certificate is signed by the same certificate issuer (CI1) that has signed said first certificate.

3. A secure element (10) according to claim 1, wherein said second certificate is signed by another certificate issuer (CI2).

4. A secure element (10) according to any of the claims 1 to 3, wherein said triggering event (34) is an event internal to said secure element (10).

5. A secure element (10) according to any of the claims 1 to 3, wherein said triggering event (34) is an event external to said secure element (10).

6. A secure element (10) according to claim 4, wherein said triggering event (34) is an information indicating that said first certificate is expired of will expire soon.

7. A certificate delivery server (30) comprising at least a microprocessor dedicated for:
a- receiving from a secure element (10) cooperating with a telecommunication terminal a Certificate Signing Request ciphered by a secret key shared with said secure element (10);
b- sending to said secure element (10) a script ciphered by said secret key, said script containing at least a new certificate for said secure element (10).

8. A certificate delivery server (30) according to claim 7, wherein said new certificate is signed by a certificate issuer (CI1) that has signed a certificate already present on said secure element (10) before step -a-.

9. A certificate delivery server (30) according to claim 7, wherein said new certificate is signed by another certificate issuer (CI2) that the one (CI1) that has signed a certificate already present on said secure element (10) before step -a-.
